## Europäisches Patentamt

## European Patent Office

## Office européen des brevets

(19)

(11) Veröffentlichungsnummer: **0 403 652**
**A1**

(12)

# EUROPÄISCHE PATENTANMELDUNG
veröffentlicht nach Art. 158 Abs. 3
EPÜ

(21) Anmeldenummer: 89904301.2

(22) Anmeldetag: **10.01.89**

(86) Internationale Anmeldenummer:
**PCT/SU89/00002**

(87) Internationale Veröffentlichungsnummer:
**WO 90/07884 (26.07.90 90/17)**

(51) Int. Cl.⁵: **A23N 7/02, B24D 3/00**

(43) Veröffentlichungstag der Anmeldung:
**27.12.90 Patentblatt 90/52**

(84) Benannte Vertragsstaaten:
**DE FR NL SE**

(71) Anmelder: **NAUCHNO-PROIZVODSTVENNOE OBIEDINENIE PO ABRAZIVAM I SHLIFOVANIJU**
**ul.Beloostrovskaya, 17**
**Leningrad, 197342(SU)**

Anmelder: **LENINGRADSKY INSTITUT SOVETSKOI TORGOVLI IMENI F. ENGELSA**
**ul. Novorossiiskaya, 50**
**Leningrad, 194018(SU)**

(72) Erfinder: **ALEXEEV, Gennady Valentinovich**
**ul. Uritskogo, 14-2 Leningradskaya obl.**
**Gatchina, 188350(SU)**
Erfinder: **ARDASHNIKOV, Boris Naumovich**
**ul. Gdanskaya, 3-75**
**Leningrad, 194017(SU)**
Erfinder: **GOLOVATSKY, Vladimir Alexandrovich**
**ul. Budapeshtskaya, 4-534**
**Leningrad, 192242(SU)**
Erfinder: **MERKULOVA, Galina Iliinichna**
**ul. Bronnitskaya, 33-2**
**Leningrad, 198147(SU)**
Erfinder: **NAUMOV, Vladimir Nikolaevich**
**ul. Babushkina, 42-1-14**

**Leningrad, 193171(SU)**
Erfinder: **SKRYABIN, Viktor Petrovich**
**ul. Furmanova, 13 Ramensky raion**
**Moskovskaya obl.**
**pos. Ilinskoe, 14020(SU)**
Erfinder: **URETSKAYA, Elena Jurievna**
**ul. Bryantseva, 12-12**
**Leningrad, 195269(SU)**
Erfinder: **CHERKUDINOV, Alexei Sergeevich**
**ul. Vavilovykh, 8-1-221**
**Leningrad, 195257(SU)**
Erfinder: **KHEGAI, Anatoly Vladimirovich**
**Kvartal V-13, 40-48 Chilanzar**
**Tashkent, 700138(SU)**
Erfinder: **GREKOVA, Irina Vasilievna**
**Kirovsky pr. 27-138**
**Leningrad, 197022(SU)**
Erfinder: **SHOKHIN, Andrei Nikolaevich**
**4-ya Krasnoarmeiskaya, 6-13**
**Leningrad, 198005(SU)**
Erfinder: **SOROKIN, Oleg Stepanovich**
**pr. Slavy, 26-1-8**
**Leningrad, 196071(SU)**
Erfinder: **ARDASHNIKOV, Sergei Borisovich**
**ul. Drezdenskaya, 4-97**
**Leningrad, 194017(SU)**

(74) Vertreter: **von Füner, Alexander, Dr.**
**Patentanwälte v. Füner, Ebbinghaus, Finck**
**Mariahilfplatz 2 & 3**
**D-8000 München 90(DE)**

(54) **ÜBERZUG DER ARBEITSORGANE EINER MASCHINE ZUR BEARBEITUNG VON KNOLLEN- UND WURZELFRÜCHTEN.**

(57) Der Überzug besteht aus einer Unterlage (1), die aus einem elektrisch leitendem Material ausgeführt ist, und einem daran befestigten Reibmittel (2), das in der Art voneinander abstehender Streifen aus einem Schleifstoff ausgeführt ist. Dieser Überzug wird auf das Arbeitsorgan aufgetragen, bei dessen Antrieb die Knollen, zum Beispiel Kartoffelknollen, sich längs des Überzuges, perpendikulär zur Stirnseite der Unterlage (1) zu bewegen beginnen. Unter der Einwirkung der Fliehkräfte werden sie an die Streifen des Reibmittels (2) angedrückt, deren Schleifkörner mit den spitzen Kanten die Schale davon abziehen. Dadurch, daß die knollen alle Schleifstreifen nacheinander passieren, rotieren sie und schälen die ganze Schale ab. Dabei stoßen sie aus den Spalten zwischen den einzelnen Schlefkörnern die Schale der vorangehenden Knolle aus.

Die durch den vorgeschlagenen Überzug abgeschälte Kartoffel weist eine glatte Oberfläche, was zur Vermin - derung der Fettmenge führt, die bei kulinären Bearbeitung aufgenommen wird, und einen erhöhten Gehalt der Oberflächenschichten an Stärke und Vitamin "C" auf. Dabei erhöht sich die Güte der Abschälung von Kartoffeln und die Leistung der Maschine.

FIG.1

- 1 -

## ÜBERZUG DER ARBEITSORGANE EINER MASCHINE ZUR BEARBEITUNG VON KNOLLEN- UND WURZELFRÜCHTEN

### Technisches gebiet

Die Erfindung bezieht sich auf das Gebiet Verarbeitung der Landwirtschaftproduktion, insbesondere auf einen Überzug der Arbeitsorgane einer Maschine zur Bearbeitung von Knollen- und Wurzelfrüchten.

### Zugrundeliegender Stand der Technik

Bekannt sind Maschinen zur Abschälung vom Knollen- und Wurzelfrüchten, deren Überzüge für schleifende Abschälung verwendet werden (V.D. Elkhina, A.A. Zhurin, L.P. Pronichkina, M.K. Bogachev "Oborudovanie predpriaty obschestvennogo pitaniya", B.I "Mekhanicheskoe oborudovanie". 1987, "Ekonomika", Moskau, S. 123 - 138, 153-157). Der Überzug besteht aus den am Arbeitsorgan befestigten Elementen in der Form von Segmenten, die durch Formung eines Gemisches aus Schleifstoff und organischem Bindemittel auf der Grundlage von Bakelit mit anschließender Wärmebehandlung hergestellt sind. Dabei beträgt die Stärke des Überzuges von 8 bis 20 mm.

Beim Betrieb werden diese Segmente durch Abbröcklung der äußeren Arbeitsschicht selbstangeschärft, wodurch ihre mechanische Festigkeit und somit die Zuverlässigkeit der Maschine im ganzen vermindert und der Brei verunreinigt wird, was seine weitere Anwendung völlig ausschließt.

Bekannt ist ein Überzug der Arbeitsorgane einer Maschine zur Bearbeitung von Knollen- und Wurzelfrüchten, der aus einem auf einer Metallunterlage angebrachten dichten Reibmittel aus polymerem Harz und Karborundumpulver besteht. (Prospekt der Firma "Oy Hackman Ab" (Finnland). Kartoffelabschälgungsmaschine "Prima", 1987, S.1).

Durch die Ausnutzung eines festeren Polymerbindemittels sichert der bekannte Überzug eine erhöhte Härte der Reibfläche und somit eine höhere Verschleißfestigkeit

- 2 -

des Arbeitsorganes.

Jedoch kennzeichnet sich der Überzug dadurch, daß das Schleifstoff von der abgeschälten Kartoffelschale verstopft wird, was zur Herabsetzung der Güte der Abschälung von Kartoffeln und der Leistung der Maschine sowie zu einem beträchtlichen Zeitaufwand für die Reparatur der Maschine, verbunden mit dem erzwungenen Ersatz des ganzen Arbeitsorganes, führt. Da als Unterlage für das Anbringen der Schleifstoffelemente dabei die Oberfläche des Arbeitsorgans selbst dient, fällt der letztere aus. Seine Wiederherstellung hängt mit einer Röstung bei höheren Temperaturen und wiederholter Auftragung des Schleifmittels zusammen, was einen bedeutenden Aufwand erfordert. Darüber hinaus hängt die Lebensdauer des Überzuges wesentlich von der Qualität der Durchführung der Vorbereitungsoperationen zur Karoffelabschälung ab. Eine schlechte Waschung führt zur Entstehung im Wassermedium, das den Überzug umspült, von chemisch aktiven Stoffen, und das Geraten in die Abschälungskammer von Sand und Steinen verursacht die Abbröckelung des Schleifstoffes.

## Offenbarung der Erfindung

Der Erfindung liegt die Aufgabe zugrunde, die Unterlage und das an dieser befestigte Schleifmittel des Überzuges der Arbeitsorgane einer Maschine zur Bearbeitung von Knollen- und Wurzelfrüchten derart auszuführen, daß die günstigen Bedingungen zur Abtrennung der Schale von dem Fleisch von Knollen- und Wurzelfrüchter mit einer höheren Erhaltung von abgeschälten konsumtiven Knollen- und Wurzelfrüchten sowie zur möglichen Verwertung von Abfällen geschaffen werden.

Die gestellte Aufgabe wird dadurch gelöst, daß im Überzug der Arbeitsorgane einer Maschine zur Bearbeitung von Knollen- und Wurzelfrüchten, der aus einer Unterlage und einem auf dieser befestigten Schleifmittel für

- 3 -

die Abschälung von Knollen- und Wurzelfrüchten besteht, erfindungsgemäß, die Unterlage aus einem biegsamen Band und das Reibmittel in der Form voneinander abstehender Streifen ausgeführt ist.

Es ist zweckmäßig, daß die Breite eines jeden Streifens des Reibmittels von 0,02 bis 0,075 von der Breite des biegsamen Bandes der Unterlage ausmacht. Das sichert eine Kontaktzeit und einen Laufweg der abzuschälenden Knollen längs den Streifen des Reibmittels, die eine zuverlässige Abtrennung der Schale von dem Fleisch bedingen.

Vorzugsweise beträgt die Breite des Spaltes zwischen den benachbarten Streifen des Reibmittels von 0,2 bis 1,5 der Streifenbreite. Das begünstigt die Abtrennung des geschälten Breis von der Oberfläche des Streifens des Reibmittels mit der nächsten Knolle und dessen Abwaschung über die Spalte zwischen den Streifen.

Besonders vorteilhaft ist es, die Streifen des Reibmittels aus einem Material mit folgendem Bestand der Ingredienzien, Ma-%, auszuführen:

Schleifstoff..............5 - 45
Nickel...................alles übrige.

Es ist auch wünschenswert, daß elektrisch nichtleitende Schleifkörner als Schleifstoff ausgenutzt werden.

Das bewirkt eine zuverlässige Fixation des Schleifkornes in der Struktur des Materials der Reibelemente für die beliebige Härte und Festigkeit der Schale, die sich im Prozeß der Lagerung ändert, sowie eine gleichmäßige Verteilung von Schleifkörnern in der Struktur des Materials der Reibelemente, ausschließend ihre Elektrisierung und Klumpenbildung sowie das Dentriwachstum bei der Herstellung des Überzuges.

Es ist bevorzugt, als nichtleitendes Schleifkorn weißen Elektrokorund auszunutzen. Das schafft günstige Bedingungen für eine intensivere Durchführung des Pro-

- 4 -

zesses der Abschälung infolge des Vorhandenseins einer großen Menge von verschleißfesten Schneidkanten.

Es ist empfehlenswert, daß das biegsame Band der Unterlage aus leitendem Stoff ausgeführt wird. Es ist durch Einfachheit des Verwirklichung des Überzuges der Arbeitsorgane beispielsweise nach der Methode der Galvanostegie verursacht.

Zur Verminderung des Metallverbrauchs und der Erleichterung der Arbeitsorgane verwendet man metallisierte Kunststoffe als leitendes Material.

Zur Verminderung des Aufwandes für die Erzeugung eines Überzuges der Arbeitsorgane mit hohen physikalisch--mechanischen Eigenschaften ist es erforderlich, als metallisierten Kunststoff metallkaschietes Textolit zu verwenden.

Es ist auch zweckmäßig, daß das biegsame Band der Unterlage aus nichtleitendem Material ausgeführt wird, wobei jeder Streifen des Reibmittels zweischichtig und die der Unterlage zugewandte Schicht aus leitendem Material ausgeführt wird. Das bedingt minimale Aufwendungen bei der Erzeugung des Überzuges, einschließend den Verbrauch an leitendem Material, und gibt die Möglichkeit, den Bereich der Anwendung von Konstruktionswerkstoffen zu erweitern.

Die erfindungsgemäße Ausführung des Überzuges der Arbeitsorgane einer Maschine zur Abschälung von Knollen- und Wurzelfrüchten ermöglicht es, ihn durch das Vorhandensein einer biegsamen festen Unterlage an den Arbeitsorganen beliebiger geometrischer Form und Konfiguration sicher zu befestigen. Die Auswahl der Winkelorientierung der Schlaifelemente in Abhängigkeit von der Bewegung der Arbeitsorgane und der Streifenmaße und der Spalte dazwischen in Abhängigkeit von der Qualität des abgeschälten Knollen- und Wurzelfruchtes machen es möglich, optimale Bedingungen für die Selbstreinigung der Flächen der Arbeitsorgane mit den nächsten Knollen und für die Abtrennung der abgeschälten Schale zu schaffen. Die Anwendung eines hochfesten Materials mit optimalen Kornmaßen für Reibelemente, die sicher vom Metallbindemittel befestigt sind, schließt praktisch dessen Ausbröckelung und Zerstörung bei der Einwirkung der
geschälten Knollen auf den Überzug aus.

Kurzbeschreibung der Zeichnungen

Nachstehend wird die vorliegende Erfindung anhand
deren konkreter Ausführungsbeispiele und beigelegter
Zeichnungen näher erläutert, wobei es zeigen:

Fig. 1 eine Ausführungsvariante des erfindungsgemäßen
Überzuges der Arbeitsorgane einer Maschine zur Bearbeitung von Knollen- und Wurzelfrüchten mit der Unterlage
in der Form eines Stahlbandes (Querschnitt);

Fig. 2 den erfindungsgemäßen Überzug der Arbeitsorgane unter Anwendung der Unterlage in der Art eines metallisierten Kunststoffes (in Querschnitt);

Fig. 3 eine Ausführungsvariante des erfindungsgemäßen
Überzuges der Arbeitsorgane unter Anwendung der Unterlage, die aus metallkaschiertem Glastextolit (in Querschnitt) ausgeführt ist;

Fig. 4 eine Gesamtansicht des erfindungsgemäßen Überzuges der Arbeitsorgane einer Maschine zur Bearbeitung
von Knollen- und Wurzelfrüchten.

Beste Ausführungsvariante der Erfindung

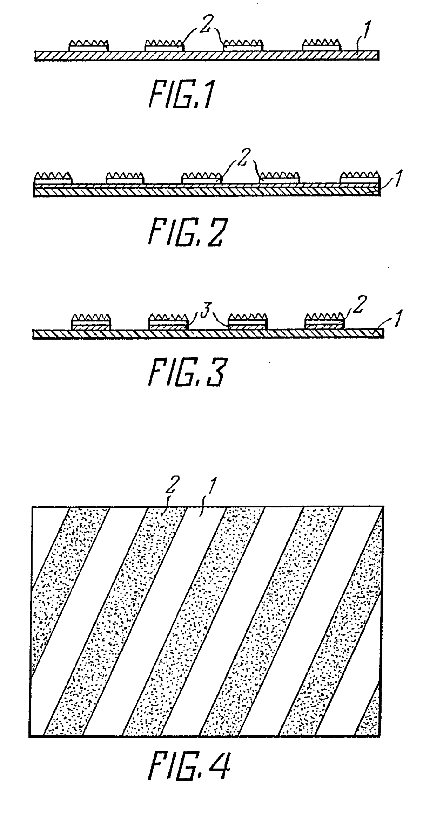

Der erfindungsgemäße Überzug der Arbeitsorgane einer
Maschine zur Bearbeitung von Knolle- und Wurzelfrüchten
besteht aus einer Unterlage 1 (Fig. 1), die in der Art
einen biegsamen Bandes ausgeführt ist, und einem an dieser befestigten Reibmittel, das aus Streifen 2 mit einer
Breite von 0,02 - 0,075 von der Bandbreite hergestellt
ist. Bei der Auswahl dieses Bereiches der Werte der Breiten des Streifens 2 geht man von der Voraussetzung aus,
daß bei einem minimalen Bearbeitungszyklus von Knollen-

EP 0 403 652 A1

- 6 -

und Wurzelfrüchten minimale Prozentwerte nicht völlig abgeschälter Knollen- und Wurzelfrüchte und Abfälle erhalten werden. Bei den anderen Werten der Breite des Streifens 2 verschlechtern sich die Ausgangskennziffern: Bei dem Breitenwert des Streifens 2 von weniger als 0,02 vergrößert sich der Prozent nicht völlig abgeschälter Knollen- und Wurzelfrüchte, aber bei den Werten von mehr als 0,075 vergrößert sich der Prozent der Abfälle.

Die Streifen 2 sind in einem Abstand voneinander angebracht, der gleich 0,2 - 1,5 von ihrer Breite ist. Die Wahl der Entfernung zwischen den Streifen 2 in dem genannten Bereich sichert eine qualitative Abwaschung des Breis vom Überzug der Arbeitsorgane. Die Vergrößerung der Entfernung zwischen den Streifen 2 führt zur Leistungsabnahme der AMaschine, und die Verkürzung der Entfernung führt zur Verschlechterung der Bearbeitungsgüte von Knollen- und Wurzelfrüchten. Darüber hinaus gewährleistet die rationelle Größe der Entfernung zwischen den Streifen 2 die Erhöhung der sanitätstechnischen Werte, beispielsweise die Verminderung des mikrobiellen Keimgehaltes durch die Verringerung der Menge der Kolonien von mesophylen Bakterien.

Die Streifen 2 sind aus einem Material ausgeführt, das folgende Zusammensetzung, Ma.-%, aufweist:

Schleifstoff............5 - 45
Nickel.................alles übrige.

wobei man nichtleitende Schleifkörner, zum Beispiel Körner von Weißelektrokorund von 160 - 500 $\mu$m Größe als Schleifstoff verwendet.

Bei der Auswahl der Ingredienzien des Materials geht man von der Voraussetzung aus, daß bei den im Prozeß der Lagerung veränderlichen Härte und Festigkeit der Schale von Knollen- und Wurzelfrüchten eine maximale Leistung und minimale Abfälle gewährleistet werden. So ist es für neue Kartoffeln zweckmäßig, die folgende Zusammensetzung der Ingredienzien, Ma.-%, zu haben:

Schleifstoff..............5

Nickel....................alles übrige,

für die Kartoffeln nach einer dauernden Lagerung:

Schleifstoff............45

Nickel...................alles übrige.

Außerdem vermindert sich bei dem Schleifstoffgehalt von weniger als 5 % die Leistung bei der Bearbeitung von Knollen- und Wurzelfrüchten, die schon gelagert worden sind (mit einer harten und festen Schalle). Bei dem Schleifstoffgehalt von über 45 % werden physikalisch- -mechanische Eigenschaften des Überzuges beeinträchtigt.

Das biegsame Band der Unterlage 1 (Fig. 1, 2) ist aus einem elektrischleitendem Material, beispielsweise aus Stahl, oder aus metallisiertem Kunststoff - metallkaschiertem Glastextolit - ausgeführt. Zur Verminderung des Verbrauches an leitendem Material ist das biegsame Band der Unterlage 1 (Fig. 3) aus nichtleitendem Material, beispielsweise aus einem Kunststoff, ausgeführt, dabei ist jeder Streifen 2 des Reibmittels zweischichtig ausgeführt. Die Schicht 3, die der Unterlage 1 zugewandt ist, ist aus leitendem Material, beispielsweise Kupfer, ausgeführt.

Nachstehend wird ein Beispiel der möglichen Methode der Herstellung des erfindungsgemäßen Überzuges der Arbeitsorgane einer Maschine zur Bearbeitung von Knollen- und Wurzelfrüchten angeführt.

Zu diesem Zweck trägt man auf die vorher vorbereitete Unterlage 1 aus dem Stahlband (Fig. 4) von 0,8 mm Stärke, 300 mm Breite und 1000 mm Länge die Streifen 2 des Reibmittels auf. Dafür reißt man zunächst den Werkstück an und trägt darauf unter einem vorgegebenen Winkel eine Schicht aus elektrisch isolierendem Lack auf, deren Breite dem Abstand zwischen den Streifen 2 gleich ist. Die Spalte zwischen diesen Streifen werden also gleich der Breite der Streifen 2 des Reibmittels gelassen. Nach der Trocknung des Lacks schüttet man gleich-

- 8 -

mäßig Schleifkörner auf das Band und taucht es in einen Elektrolyseur. Indem man den elektrischen Strom innerhalb verschiedener Zeitspanne durchläßt, erhält man ein verschiedenes Verhältnis zwischen den Schleifkörnern und dem Nickel in den Streifen 2 des Reibmittels. Nach dem Herausziehen des Bandes aus dem Elektrolyseur werden die Schleifkörner von den mit dem Lack bedeckten Streifen entfernt. Nach dem Waschen und Trocken wird der Überzug auf der Innenfläche eines Arbeitsorganes, zum Beispiel einer Reibtrommel montiert.

Der Überzug funktioniert wie folgt. Zunächst wird der Überzug an dem Arbeitsorgan durch die metallene Unterlage 1 befestigt. Beim Antrieb des Arbeitsorganes ( in der Zeichnung nicht angedeutet) beginnen die Knollen, sich längs der Fläche des Überzuges, perpendikulär zur Stirnseite der Metallunterlage 1 zu bewegen. Unter der Einwirkung der Fliehkräfte, der Schwerkraft oder einer speziellen Schnekke werden sie an die Streifen 2 des Reibmittels angedrückt, deren Schleifkörner mit den spitzen Kanten die Schale davon entfernen. Dadurch, daß die Knollen alle Streifen nacheinander passieren, rotieren sie durch das Reiben, und die ganze Schale wird geschält. Dabei stoßen sie, indem sie jeden folgenden Streifen durchgehen, aus den Spalten zwischen den einzelnen Schleifkörnern die Schale von der vorangehenden Knolle in den Zwischenstreifenraum aus. Davon wird die Schale mit den Wasserstrahlen in einen Absetzgehälter abgewaschen.

Der erfindungsgemäße Überzug der Arbeitsorgane einer Maschine zur Bearbeitung von Knollen- und Wurzelfrüchten schafft günstige Bedingungen für die Abtrennung der Schale vom Fleisch der Knollen unter Erhaltung konsumtiver Eigenschaften der geschälten Knollen. Die durch den vorgeschlegenen Überzug geschalte Kartóffel weist eine glattere Oberfläche, was zur Verminderung der Menge von Fett führt, das bei kulinarischer Bearbeitung absorbiert wird, und einen erhöhten Gehalt der Oberflächenschichten an

- 9 -

Stärke und Vitamin "C" auf. Die Güte der Kartoffelschälung erhöht sich durchschnittlich um 8 - 10 %, die Leistung der Maschine zur Bearbeitung von Knollen- und Wurzelfrüchten, ausgerüstet mit dem erfindungsgemäßen Überzug, erhöht sich aber fast um 20 % unter Verringerung der Abfälle um 5 - 7 %.

Industrielle Anwendbarkeit

Die vorliegende Erfindung kann mit Erfolgt zur Abschälung von Knollen- und Wurzelfrüchten, beispielsweise von Kartoffeln, in der Nahrungsmittelindustrie und bei öffentlicher Ernährung angewendet werden.

- 10 -

PATENTANSPRÜCHE

1. Überzug der Arbeitsorgane einer Maschine zur Bearbeitung von Knollen- und Wurzelfrüchten, der aus einer Unterlage (1) und einem daran befestigten Reibmittel zur Abschälung der Schale von Knollen- und Wurzelfrüchten besteht, dadurch g e k e n n z e i c h n e t, daß die Unterlage (1) aus einem biegsamen Band und das Reibmittel in der Art voneinander abstehender Streifen (2) ausgeführt ist.

2. Überzug der Arbeitsorgane einer Maschine zur Bearbeitung von Knollen- und Wurzelfrüchten nach Anspruch 1, dadurch g e k e n n z e i c h n e t, daß die Breite jedes Streifens (2) des Reibmittels 0,02 - 0,075 von der Breite des Biegsamen Bandes der Unterlage (1) beträgt.

3. Überzug der Arbeitsorgane einer Maschine zur Bearbeitung von Knollen- und Wurzelfrüchten nach Anspruch 1 oder 2, dadurch g e k e n n z e i c h n e t, daß die Breite des Spaltes zwischen den benachbarten Streifen (2) des Reibmittels 0,2 - 1,5 von deren Breite beträgt.

4. Überzug der Arbeitsorgane einer Maschine zur Bearbeitung von Knollen- und Wurzelfrüchten nach Anspruch 1, dadurch g e k e n n z e i c h n e t, daß die Streifen (2) des Reibmittels aus einem Materiel folgender Zusammensetzung der Ingredienzien, Ma.-%, ausgeführt sind:

Schleifstoff...........5 - 45
Nickel................alles übrige.

5. Überzug der Arbeitsorgane einer Maschine zur Bearbeitung von Knollen- und Wurzelfrüchten nach Anspruch 4, dadurch g e k e n n z e i c h n e t, daß man als Schleifstoff elektrisch nichtleitende Schleifkörner ausnutzt.

6. Überzug der Arbeitsorgane einer Maschine zur Bearbeitung von Knollen- und Wurzelfrüchten nach Anspruch 5, dadurch g e k e n n z e i c h n e t, daß man als nichtleitenden Schleifkorn weißen Elektrokorund ausnutzt.

- 11 -

7. Überzug der Arbeitsorgane einer Maschine zur Bearbeitung von Knollen- und Wurzelfrüchten nach Anspruch 1, dadurch g e k e n n z e i c h n e t, daß das biegsame Band der Unterlage (1) aus einem elektrisch leitendem Material ausgeführt ist.

8. Überzug der Arbeitsorgane einer Maschine zur Bearbeitung von Knollen- und Wurzelfrüchten nach Anspruch 7, dadurch g e k e n n z e i c h n e t, daß man als elektrisch leitendes Material der Unterlage (1) einen metallisierten Kunststoff ausnutzt.

9. Überzug der Arbeitsorgane einer Maschine zur Bearbeitung von Knollen- und Wurzelfrüchten nach Anspruch 8, dadurch g e k e n n z e i c h n e t, daß man als metallisierten Kunststoff metallkaschiertes Glastextolit ausnutzt.

10. Überzug der Arbeitsorgane einer Maschine zur Bearbeitung von Knollen- und Wurzelfrüchten nach Anspruch 1, dadurch g e k e n n z e i c h n e t, daß das biegsame Band der Unterlage (1) aus einem nichtleitenden Material ausgeführt ist, wobei jeder Streifen (2) des Reibmittels zweischichtig und die Schicht (3), die der Unterlage (1) zugewandt ist, aus einem elektrisch leitendem Material ausgeführt ist.

*FIG.1*

*FIG.2*

*FIG.3*

*FIG.4*

# INTERNATIONAL SEARCH REPORT

International Application No PCT/SU 89/00002

**I. CLASSIFICATION OF SUBJECT MATTER** (if several classification symbols apply, indicate all)

According to International Patent Classification (IPC) or to both National Classification and IPC

Int.Cl.$^5$    A 23 N7/02, B24D 3/00

**II. FIELDS SEARCHED**

Minimum Documentation Searched

| Classification System | Classification Symbols |
|---|---|
| Int.Cl.$^4$ | A 23N 7/00,7/02, B24D 3/00,3/06,9/00,II/02,II/04 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No |
|---|---|---|
| A | SU,AI,204049(Tsentralnoe konstruktorskoe bjuro torgovogo mashinostroenia) 15 January 1968 (15.01.68) | I-4 |
| A | FR,AI, 24II 575(Magnuson Engineers Inc) 13 July 1979 (13.09.79), see claims | I-4 |
| A | DE,AI,27 43 338(Atlas Pacific Engineering CO,Emeryville), 5 April 1979 (05.04.79), see claims | I-4 |
| A | SU,AI,I4I27I0 (Leningradsky institut sovetskoi torgovli et al),30 July 1988 (30.07.88) | 5-7 |
| A | SU,AI,697306 (Vsesojuzny nauchno-issledovatelsky i konstruktorsko-tekhnologichesky institut prirodnych almazov i instrumenta), 25 November 1979 (25.II.79) | 8-I0 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 29 August 1989 (29.08.89) | 12 October 1989 (02.10.89) |

| International Searching Authority | Signature of Authorized Officer |
|---|---|
| ISA/SU | |

Form PCT/ISA/210 (second sheet) (January 1985)